# FASCICULE DE BREVET EUROPEEN

(11) **EP 3 807 570 B1**
(45) Date de publication et mention de la délivrance du brevet: **13.09.2023**
(21) Numéro de dépôt: 19746119.7
(22) Date de dépôt: 17.06.2019
(51) Int. Cl.: F17D 1/04

(54) **INSTALLATION DE REBOURS À OPTIMISATION ÉNERGÉTIQUE**
ENERGIEOPTIMIERTE NACHSPEISEANLAGE
ENERGY-OPTIMIZED BACKFEEDING INSTALLATION

(30) Priorité: 15.06.2018 FR 1855299
(43) Date de publication de la demande: 21.04.2021
(73) Titulaire: GRTgaz, 92270 Bois-Colombes (FR)
(72) Inventeur: DUFOUR, Daniel, 54000 Nancy (FR); SESMAT, Alban, 92320 Chatillon (FR); BAINIER, Francis, 75015 Paris (FR)
(74) Mandataire: Cornuejols, Georges
(86) Numéro de dépôt international: PCT/FR2019/051473
(87) Numéro de publication internationale: WO 2019/239083

(56) Documents cités:
- DE-A1-102009 038 128
- FR-A1- 3 001 523
- FR-A1- 3 007 417
- FR-A1- 3 035 598
- US-A1- 2015 240 996
- US-B2- 7 624 770
- Phil Winnard: "IFI CAPACITY ENHANCEMENT PROJECT MP TO IP NETWORK COMPRESSION", , 17 octobre 2012 (2012-10-17), XP055558364, Extrait de l'Internet: URL:http://www.biogas.org.uk/images/upload /news_53_Skipton-Within-Network-Compressor -CNG-Services.pdf [extrait le 2019-02-18]
- Jens Darocha ET AL: "The Power Pioneers Bio-Natural Gas Plant Emmertsbühl Feeding biogas into the natural gas grid Emmertsbühl, 27 th April 2012 Bio-Natural Gas Plant Emmertsbühl", , 27 avril 2012 (2012-04-27), XP055581239, Extrait de l'Internet: URL:http://static.wm3.se/sites/2/media/134 36_Arkiv_Emmertsbuehl_20120427.pdf?1402830 868 [extrait le 2019-04-15]

## Description

### DOMAINE TECHNIQUE

La présente invention concerne une installation de rebours à optimisation énergétique. Elle s'applique, en particulier, aux réseaux de transport de gaz pour exporter des excédents de gaz renouvelable d'un réseau de distribution vers un réseau de transport, qui a une capacité de stockage beaucoup plus élevée.

### ETAT DE LA TECHNIQUE

La production de biogaz connaît une forte croissance en Europe et sa valorisation conditionne la création d'une filière de méthanisation pérenne. Dans la suite, le « biométhane » définit le gaz produit à partir du biogaz brut issu de la méthanisation anaérobique de déchets organiques (la biomasse) ou par gazéification haute température (suivie d'une synthèse par méthanation) ; épuré et traité de façon à le rendre interchangeable avec du gaz naturel de réseau.

Si la méthode de valorisation la plus courante est la production de chaleur et/ou d'électricité, la valorisation sous forme de carburant et l'injection de biométhane dans le réseau de gaz naturel sont aussi en développement.

Dans un contexte de fort développement du biométhane, les distributeurs de gaz naturel se trouvent face à des situations de manque d'exutoire. En effet, les consommations des clients domestiques varient en moyenne de 1 à 10 entre l'hiver et l'été sur les distributions publiques. L'injection de biométhane n'est initialement possible que si elle se fait à un débit inférieur au débit minimal relevé pendant les périodes de plus faibles consommations ou si le biométhane est produit au plus proche des consommations. Lorsque la production dépasse les quantités consommées, cela tend à saturer les réseaux de distribution lors des saisons chaudes. Cette situation limite le développement de la filière de production de biométhane par la congestion des réseaux de distribution de gaz naturel. Plusieurs solutions ont été identifiées pour résoudre ce problème : le maillage des réseaux de distribution pour augmenter les capacités de consommation du biométhane produit par la multiplication des consommateurs raccordés, la modulation de la production de biométhane selon les saisons et les besoins de consommation, la micro-liquéfaction et compression pour stocker les productions de biométhane pendant les saisons de faible consommation, le développement d'usages du gaz (pour la mobilité, notamment), ainsi que la réalisation de postes de rebours entre les réseaux de distribution et de transport de gaz naturel.

Les installations de rebours sont ainsi une des solutions identifiées pour développer les capacités d'injection de biométhane. Ces installations permettent d'exporter des excédents de biométhane d'un réseau de distribution vers le réseau de transport, en les comprimant et les réinjectant dans ce réseau de transport pour ainsi bénéficier de sa plus grande capacité de stockage de gaz. Ainsi, les producteurs ne devraient plus limiter leurs productions et la rentabilité de leurs projets serait plus facilement assurée. Le poste de rebours est un ouvrage de l'opérateur de transport permettant le transfert de gaz depuis le réseau de distribution vers le réseau de transport disposant d'une grande capacité de stockage, par l'intermédiaire d'une station de compression de gaz. Le poste de rebours peut être localisé soit à proximité du poste de détente, soit à un autre endroit où les réseaux de transport et de distribution se croisent.

Les postes de rebours existants présentent l'inconvénient d'avoir des coûts d'investissement et d'exploitation élevés, notamment en termes de consommation électrique.

Une installation de rebours est connue du document DE102009038128A1.

### EXPOSE DE L'INVENTION

La présente invention vise à remédier à tout ou partie de ces inconvénients.

La présente invention vise un système de rebours comportant, une installation de rebours à optimisation énergétique comportant :
- au moins un compresseur entre un réseau de gaz à une première pression et un réseau de gaz à une deuxième pression supérieure à la première pression, le compresseur étant entraîné par un moteur électrique,
- un automate de commande du fonctionnement de chaque compresseur,
- au moins un capteur de conformité de qualité du gaz circulant dans le compresseur,
- au moins un compteur pour compter un débit de gaz circulant dans le compresseur,
- au moins un filtre pour filtrer le gaz circulant dans le compresseur,
- un détendeur de gaz pour détendre du gaz initialement à la deuxième pression pour alimenter le réseau de gaz à la première pression et
- une génératrice entraînée par le détendeur de gaz; et

- une unité de cogénération de chaleur et d'énergie électrique, la chaleur étant utilisée pour réchauffer le gaz en cours de détente, la sortie d'électricité de la génératrice étant reliée à la sortie d'électricité de l'unité de cogénération.

Grâce à ces dispositions, la détente du gaz à la haute pression d'un réseau de transport vers la basse ou moyenne pression d'un réseau de distribution génère de l'électricité qui peut être, ensuite, utilisée pour entraîner le moteur électrique du compresseur.

La présente invention optimise ainsi la consommation énergétique d'une installation de rebours associé à un poste de livraison de gaz. Elle utilise l'énergie de détente du poste de livraison de gaz et minimise le coût d'exploitation de l'installation de rebours liée à la consommation énergétique de compression.

Dans des modes de réalisation, le compresseur et le détendeur de gaz sont confondus.

Grâce à ces dispositions, le coût de fabrication de l'installation de rebours est réduit.

Dans des modes de réalisation, la génératrice est constituée du moteur électrique d'au moins un compresseur.

Grâce à ces dispositions, le coût de fabrication de l'installation de rebours est réduit.

Dans des modes de réalisation, l'installation de rebours comporte un embrayage entre le détendeur de gaz et la génératrice.

Grâce à ces dispositions, si la génératrice est constituée du moteur électrique d'un compresseur, le fonctionnement du compresseur n'entraîne pas le détendeur de gaz.

Dans des modes de réalisation, l'installation de rebours comporte un embrayage entre le moteur du compresseur et le compresseur.

Grâce à ces dispositions, si la génératrice est constituée du moteur électrique d'un compresseur, le fonctionnement du détendeur de gaz n'entraîne pas le compresseur.

Dans des modes de réalisation, l'installation de rebours comporte un moyen de mise à l'air du détendeur de gaz.

Grâce à ces dispositions, si la génératrice est constituée du moteur électrique d'un compresseur, le fonctionnement du compresseur consomme peu d'énergie au niveau du détendeur de gaz car le détendeur de gaz est alors mis à l'air.

Dans des modes de réalisation, l'installation de rebours comporte un moyen de mise à l'air du compresseur.

Grâce à ces dispositions, si la génératrice est constituée du moteur électrique d'un compresseur, le fonctionnement du détendeur de gaz est peu perturbée par le fonctionnement du compresseur qui est alors mis à l'air.

Dans des modes de réalisation, l'installation de rebours comporte, de plus, un détendeur de gaz sans récupération énergétique en parallèle du détendeur de gaz entraînant la génératrice. Dans ces modes de réalisation, on modifie un poste de livraison existant avec vanne de détente et on y ajoute un circuit parallèle pour faire passer le gaz dans un détendeur de gaz entraînant la génératrice. Ces modes de réalisation, permettent de faire coexister deux circuits de gaz, avec la possibilité d'utiliser le poste de détente en fonctionnement classique ou en générateur d'électricité.

Dans des modes de réalisation, le compresseur est un compresseur à piston et clapets.

Dans des modes de réalisation, le compresseur est un compresseur centrifuge à aubages variables.

Grâce à chacune de ces dispositions, le compresseur est réversible en détendeur d'entraînement de la génératrice.

Dans des modes de réalisation, l'installation de rebours comporte un échangeur de chaleur réversible commun pour le chauffage du gaz à détendre et le refroidissement du gaz à comprimer.

Dans des modes de réalisation, l'installation de rebours comporte, pendant le fonctionnement du détendeur, une cogénération de froid et d'énergie électrique.

Dans des modes de réalisation, l'installation de rebours comporte, pendant le fonctionnement du compresseur, une génération de chaleur.

Dans des modes de réalisation, l'installation de rebours est associée à une unité de cogénération de chaleur et d'énergie électrique, la chaleur étant utilisée pour réchauffer le gaz en cours de détente, la sortie d'électricité de la génératrice étant reliée à la sortie d'électricité de l'unité de cogénération.

Dans des modes de réalisation, l'unité de cogénération comporte un moteur accouplé à une génératrice, la chaleur dégagée par le moteur réchauffant le gaz en cours de détente.

Dans des modes de réalisation, l'énergie thermique provenant du moteur, est contenue dans les eaux de refroidissement du moteur (huile de lubrification, chemise des pistons, refroidissement du gaz) et dans les fumées libérées par la combustion, un circuit caloporteur collectant au moins une partie de cette énergie thermique pour préchauffer le gaz avant la détente et éventuellement le réchauffer pendant la détente, dans le cas d'une détente étagée.

Dans des modes de réalisation, l'unité de cogénération comporte une source géothermique dont la chaleur résiduelle, après chauffage de bâtiments ou équipements, réchauffe le gaz en cours de détente.

Dans des modes de réalisation, l'installation de rebours comporte une pompe à chaleur.

Dans des modes de réalisation, la génératrice comporte un alternateur, générateur synchrone 4 pôles qui tourne à la vitesse du réseau, par exemple 50 Hz, soit 1500 tr.min⁻¹.

Dans des modes de réalisation, la génératrice est une turbine radiale réversible en compresseur centrifuge, bi-étagée, avec deux rotors montés de part et d'autre d'un alternateur.

Dans des modes de réalisation, l'alternateur est à vitesse variable et un comporte stator variable.

Dans des modes de réalisation, la détente ou la compression sont étagée en montant deux rotors sur un arbre unique.

Dans des modes de réalisation, la génératrice comporte une turbine radiale montée sur une boîte de vitesse avec une mutualisation pour la lubrification des roulements et de la boîte de vitesse.

Dans des modes de réalisation, une garniture d'étanchéité (à l'huile ou au gaz) isole le gaz de réseau de l'environnement.

### BREVE DESCRIPTION DES FIGURES

D'autres avantages, buts et caractéristiques de la présente invention ressortiront de la description qui va suivre faite, dans un but explicatif et nullement limitatif, en regard des dessins annexés, dans lesquels :
- la figure 1 représente, sous forme d'un schéma bloc, une installation de rebours connue dans l'art antérieur,
- la figure 2 représente, sous forme d'un schéma bloc, une installation de rebours objet de l'invention,
- la figure 3 représente, sous forme d'un schéma bloc, un premier mode de réalisation particulier d'une installation de rebours objet de l'invention,
- la figure 4 représente, sous forme d'un schéma bloc, un deuxième mode de réalisation particulier d'une installation de rebours objet de l'invention,
- la figure 5 représente, sous forme d'un schéma bloc, un troisième mode de réalisation particulier d'une installation de rebours objet de l'invention,
- les figures 6A, 6B et 6C représentent plusieurs phases de fonctionnement d'un compresseur à piston réversible,
- la figure 7 représente l'ensemble cylindre et piston d'un compresseur à piston réversible dans le cas d'un piston double effets,
- la figure 8 représente le principe de fonctionnement de l'utilisation du compresseur à piston réversible en mode moteur,
- La figure 9 représente la position d'aubages variables d'un compresseur centrifuge réversible dans sa fonction de récupération d'énergie de détente de gaz, et
- La figure 10 représente la position des aubages variables du compresseur illustré en figure 9, dans sa fonction compression.

### DESCRIPTION DE MODES DE REALISATION DE L'INVENTION

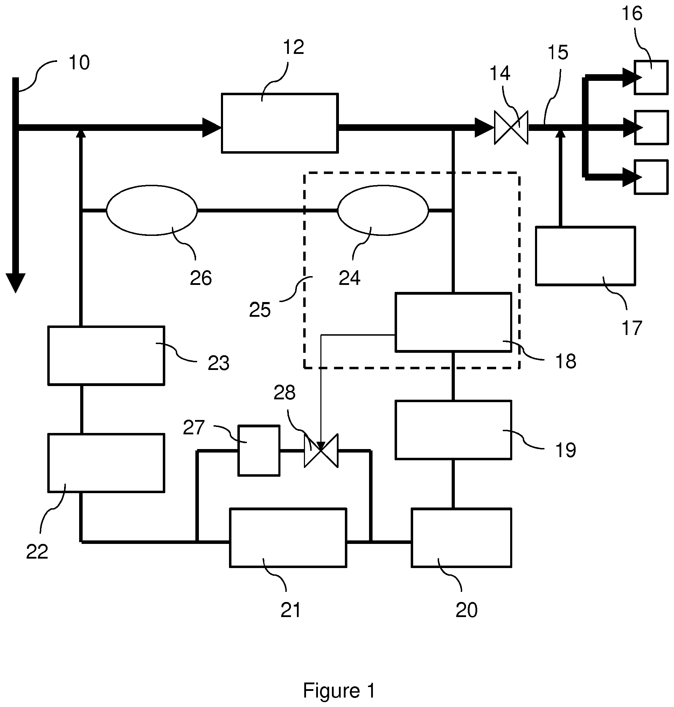

La figure 1 représente schématiquement le principe d'une installation de rebours connue dans l'art antérieur. L'installation de rebours dispose d'un ensemble de fonctions techniques permettant de créer un flux de gaz en maîtrisant les conditions d'exploitation propres à un réseaux de transport 10 et à un réseau de distribution 15. Ces fonctions comportent :
- le traitement et le contrôle 19 de la conformité de la qualité du gaz aux prescriptions techniques de l'opérateur de transport comportant au moins un capteur de constituant du gaz en circulation,
- le comptage par compteur 20 des quantités transférées,
- la compression du gaz en provenance du réseau de distribution 15, par au moins un compresseur 21, il s'agit généralement de compresseurs à moteur électrique et à pistons, avec deux ou trois étages de compression,
- la régulation 24 en pression ou en débit,
- la filtration par filtre 22, amont et aval,
- la gestion 18 de la stabilité du fonctionnement du réseau de distribution,
- les organes de sécurité 26 et
- les outils de pilotage 24 et de suivi de l'installation de rebours.

Ces différentes fonctions sont décrites ci-dessous. Il s'y ajoute des utilités (sources électriques, réseau de communication, etc.) nécessaires à la conduite d'une installation industrielle. L'installation de rebours est dimensionnée en tenant compte :
- de la pression d'exploitation du réseau de transport 10 et de celle du réseau de distribution 15. La première doit être comprise entre 30 et 60 bars sur le réseau régional et peut atteindre 85 bars sur le réseau principal. La seconde est de l'ordre de 4 à 19 bars sur les réseaux MPC (Réseau Moyenne Pression de type C, soit une pression entre 4 et 25 bars) et inférieure à 4 bars sur les réseaux MPB (Réseau Moyenne Pression de type B, soit une pression entre 50 millibars et 4 bars),
- de la capacité maximale de production des producteurs de biométhane 17 susceptibles d'injecter du biométhane dans le réseau de distribution 15, capacité qui varie de quelques dizaines de Nm³/h pour les plus petites unités, à plusieurs centaines de Nm³/h pour les plus grosses,
- de la consommation des consommateurs 16 sur le réseau de distribution 15, notamment la consommation minimale et
- de la faculté du réseau de distribution 15 à absorber des variations de pression (volume en eau).

L'ensemble de ces données permet de déterminer le débit maximal de l'installation de rebours et d'estimer sa durée de fonctionnement. Cette durée peut varier, selon les cas, d'un fonctionnement occasionnel (10 à 15 % du temps) jusqu'à un fonctionnement quasi-permanent. Cet exercice doit aussi intégrer le fait que les installations des producteurs 17 ne sont pas mises en service simultanément mais au fur et à mesure des années.

Concernant l'analyse 19 de la conformité du gaz, des écarts existent entre les spécifications de qualité de gaz appliquées aux réseaux de transport 10 et de distribution 15, du fait des différentes pressions d'exploitation, de l'infrastructure, des matériaux, des usages et des interfaces avec les stockages souterrains. Les spécifications des réseaux de transport 10 sont généralement les plus contraignantes que celles des réseaux de distribution 10. Ainsi, pour garantir que l'installation de rebours de gaz du réseau de distribution 15 vers le réseau de transport 10 s'insère dans le fonctionnement opérationnel du réseau de transport 10, les dispositions suivantes sont intégrées dans la fonction de conformité de qualité de gaz 19 :
- une unité de déshydratation à l'amont de la compression pour réduire les risques de condensation sur le réseau haute pression de transport, de formation d'hydrates et de corrosion,
- en option, un laboratoire d'analyse des paramètres de combustion (indice de Wobbe, pouvoir calorifique et densité de gaz) pour injecter les injecter les relevés dans le système de détermination des énergies de l'opérateur de transport.

A la discrétion de l'opérateur de transport, l'analyse d'autres teneurs de composés (CO₂, H₂O, THT, etc.) est optionnelle et n'est réalisée que s'il y a un risque avéré de contamination du réseau de transport 10 (exemple : rebours d'un biométhane avec une forte teneur en CO₂ sans possibilité de dilution sur les réseaux de distribution 15 et de transport 10, ou opéré à une pression très élevée).

Concernant le comptage de gaz 20, l'installation de rebours est équipée d'une chaîne de comptage constituée d'un compteur et d'un dispositif de détermination de l'énergie local ou régional conformément à la métrologie légale.

Concernant la compression de gaz, l'unité de compression permet de comprimer le surplus de production de biométhane à la pression de service du réseau de transport 10. En fonction de critères économiques et de disponibilités de l'installation, plusieurs configurations sont possibles, par exemple :
- un compresseur 21 réalisant 100 % du besoin de rebours maximum,
- deux compresseurs 21 réalisant chacun 100 % du besoin de rebours maximum où
- deux compresseurs 21 réalisant chacun 50 % du besoin de rebours maximum.

La configuration est choisie par une étude des différents avantages et inconvénients en termes de coûts, de disponibilité, d'encombrement, et de possibilité d'évolution de l'unité de compression. La pression d'aspiration à considérer est la pression de service du réseau de distribution 15, qui dépend notamment des pressions d'injection des producteurs de biométhane 17. La pression de construction au refoulement à considérer est la pression maximale de service (« PMS ») du réseau de transport, par exemple 67,7 bars. Pour assurer le démarrage, la protection anti-pompage de chaque compresseur 21 (hors compresseur à pistons) ou le fonctionnement en recyclage stabilisé, un circuit de recyclage 27 muni d'une vanne 28 peut être prévu. Le circuit de recyclage détend du gaz à la deuxième pression et l'injecte en amont du compresseur lors de la mise en fonctionnement d'au moins un compresseur, sous la commande de l'automate 25.

L'étanchéité de chaque compresseur 21 peut être réalisée à l'huile ou à garniture sèche. Dans le premier cas, certaines dispositions de filtration sont mises en place (voir ci-dessous).

Un automate 25 réalise les fonctions de pilotage 24, de commande de chaque compresseur et de régulation et de stabilité 18 du réseau 15. On note que, dans toute la description, le terme « l'automate » signifie un automate ou un système informatique ou un ensemble d'automates et/ou de systèmes informatiques (par exemple un automate par fonction).

Concernant la régulation, l'évolution de la pression du réseau de distribution 15 à proximité de l'installation de rebours est corrélée au débit de gaz transitant par l'installation de rebours. Ces évolutions sont le résultat du fonctionnement dynamique des consommations de gaz sur le réseau de distribution 15, des capacités injectées de biométhane par les producteurs 17 et du fonctionnement de l'installation de livraison, par le biais d'une vanne 14, et de rebours. On intègre donc des possibilités d'adaptation de la plage de fonctionnement de la pression d'aspiration de l'installation de rebours, ainsi qu'une régulation des compresseurs 21 qui peut anticiper les contraintes s'exerçant sur le réseau de distribution 15, selon les configurations rencontrées. C'est une différence avec les postes de livraison sans rebours, pour lesquels la pression est régulée sur le point de livraison de façon à être fixe, quelles que soient les consommations par les consommateurs 16. En conséquence, le mode de régulation (pression ou débit) du flux en rebours vers le réseau de transport 10 est adapté au bon fonctionnement de l'installation de rebours.

Selon les spécifications des compresseurs et pour éviter leur détérioration ou du fait des contraintes liées au fonctionnement du réseau de transport 10, une filtration est prévue dans la fonction de conformité de qualité de gaz, en amont de la compression pour récupérer les éventuels liquides et les poussières contenues dans le gaz issu du réseau de distribution 15. De plus, dans le cas d'un compresseur 21 à étanchéité à l'huile, un filtre coalesceur 22 est installé en sortie du compresseur 21, par exemple avec une purge manuelle et un niveau visuel.

Un système de refroidissement 23 refroidit tout ou partie du gaz comprimé pour maintenir la température à l'aval, vers le réseau de transport 10, à une valeur inférieure à 55 °C (température de certification des équipements). Pour assurer le fonctionnement du système de refroidissement 23, celui-ci est dimensionné à partir de valeurs de température ambiante pertinentes selon les historiques météorologiques.

Le poste de livraison 12 est une installation, située à l'extrémité aval du réseau de transport qui permet la livraison du gaz naturel en fonction des besoins exprimés par le client (pression, débit, température...). Il s'agit donc de l'interface de détente du gaz du réseau de transport 10 vers le réseau de distribution 15 ou vers certaines installations industrielles. Le poste de livraison 12 intègre donc des vannes de détente pour diminuer la pression pour s'adapter aux conditions imposées par l'aval.

Pour éviter des phénomènes d'instabilité, l'installation de rebours ne doit pas fonctionner simultanément avec le poste 12 de détente et livraison du réseau de transport 10 vers le réseau de distribution 15. Des valeurs limites de démarrage et d'arrêt de l'installation de rebours sont fixées en conséquence et chaque automate 25 d'une installation combinant détente 12 et rebours est adapté de façon à interdire la simultanéité de ces deux fonctions. Les installations de rebours, lors de leur phase de démarrage, de fonctionnement et d'arrêt, limitent les perturbations du réseau amont (distribution 15) et du réseau aval (transport 10) en évitant notamment de déclencher des sécurités en pression du poste de livraison 12. Les paramètres suivants sont pris en compte :
- nombre de cycles de démarrage et d'arrêt de chaque compresseur 21 et sa compatibilité avec les recommandations du fournisseur du compresseur 21,
- le démarrage et l'arrêt de chaque compresseur 21 par une routine, faisant suite à une temporisation,
- l'utilisation d'un volume tampon (non représenté) en amont de chaque compresseur 21, pour amortir les variations de pression et de débit du réseau de distribution 15.

Une fonction de pilotage et de supervision réalisée par l'automate 25 permet d'obtenir :
- un mode de fonctionnement automatique,
- une visualisation/supervision du fonctionnement de l'installation de rebours et
- le démarrage de l'installation de rebours.

L'historisation des données est réalisée pour attester des conditions de fonctionnement.

En cas d'urgence, l'installation de rebours est isolée du réseau de distribution 15, par la fermeture de la vanne 14. Une fonction « arrêt d'urgence » permet d'arrêter et de mettre en sécurité l'installation de rebours. L'installation de rebours est aussi munie de dispositifs de sécurité en pression et en température 26. Il n'y a pas mise à l'évent automatique sauf contre-indication des études de sécurité. L'installation de rebours est équipée de systèmes de détection incendie et gaz 26. Un moyen de protection contre les sur-débits est prévu pour protéger les appareils, sous la forme d'un organe physique tel qu'un orifice de restriction ou par l'intermédiaire d'un automatisme.

On note que le débit d'un rebours peut varier de quelques centaines à quelques milliers de Nm³/h selon les cas.

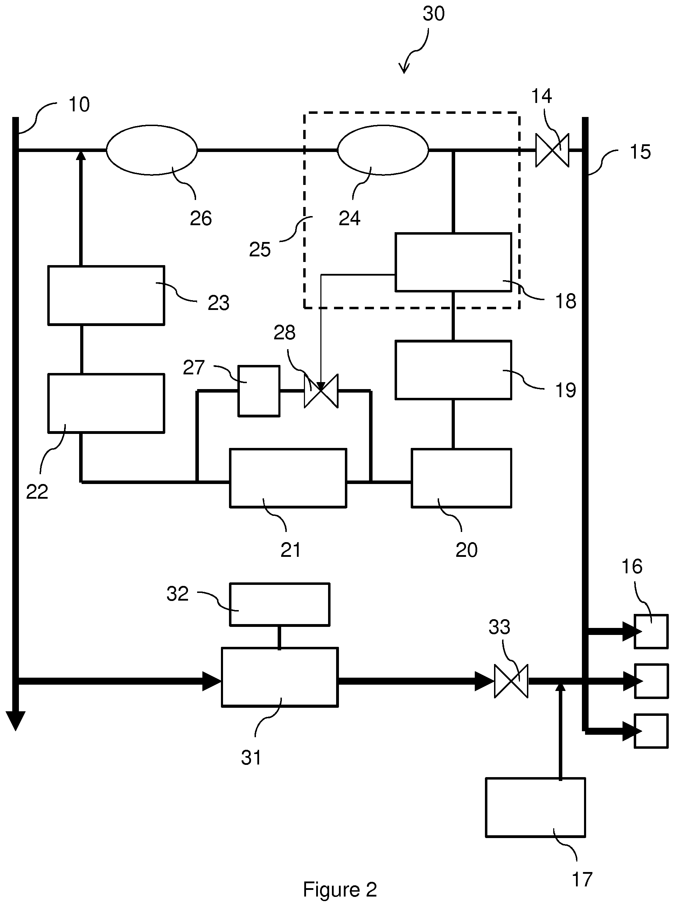

On observe, en figure 2, une installation de rebours 30 selon l'invention. Cette installation de rebours 30 comporte les mêmes éléments que l'installation illustrée en figure 1, à l'exception du poste de fourniture 12. En revanche, l'installation 30 comporte un détendeur de gaz 31 pour détendre du gaz du réseau de transport 10 pour alimenter le réseau de distribution 15. Le détendeur de gaz 31 est muni d'une génératrice d'électricité 32 entraînée par le détendeur de gaz 31. Une vanne 33 permet d'isoler les réseaux de transport 10 et de distribution 15.

La présente invention cherche à optimiser la consommation énergétique d'un poste de livraison de gaz et d'une installation de rebours. Elle cherche en particulier à utiliser l'énergie de détente des postes de livraison de gaz et à minimiser les coûts d'exploitation des installations de rebours (dépenses d'exploitation, notamment liées à la compression).

La présente invention s'applique notamment lorsque l'installation de rebours est située à proximité du poste de livraison, ce qui est courant car il s'agit d'un point d'interface évident entre les réseaux de transport et de distribution.

L'invention propose de combiner l'énergie potentiellement disponible à la détente (poste de livraison) avec le besoin énergétique nécessaire à la compression (installation de rebours).

L'optimisation énergétique entre l'installation de rebours et le poste de livraison est double : elle veut à la fois récupérer l'énergie valorisable libérée lors de la détente du gaz dans le poste de livraison mais également, pour certaines configurations, mutualiser des composants entre le poste de livraison et l'installation de rebours. On réduit ainsi les coûts d'exploitation et d'investissement de ces installations.

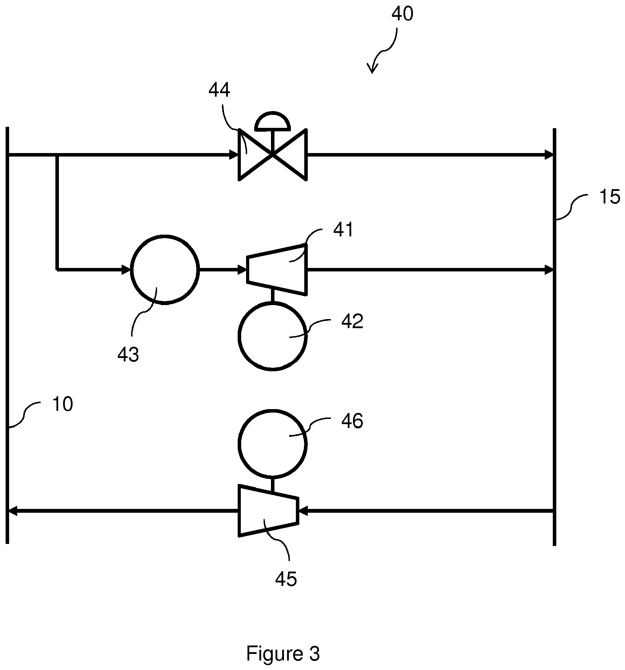

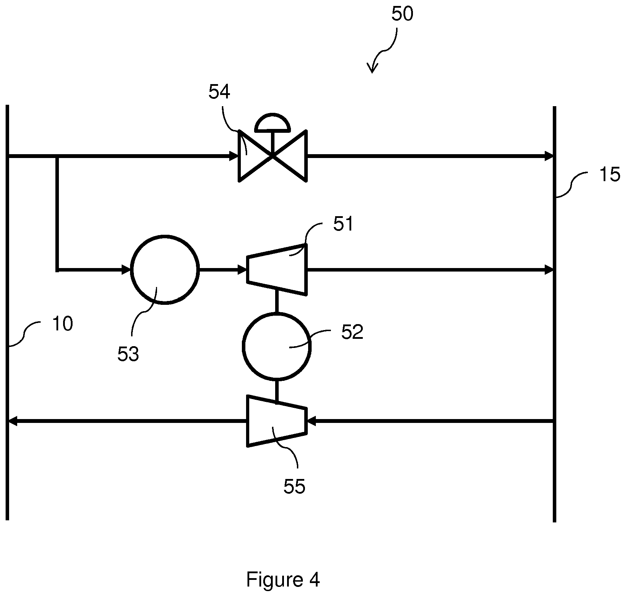

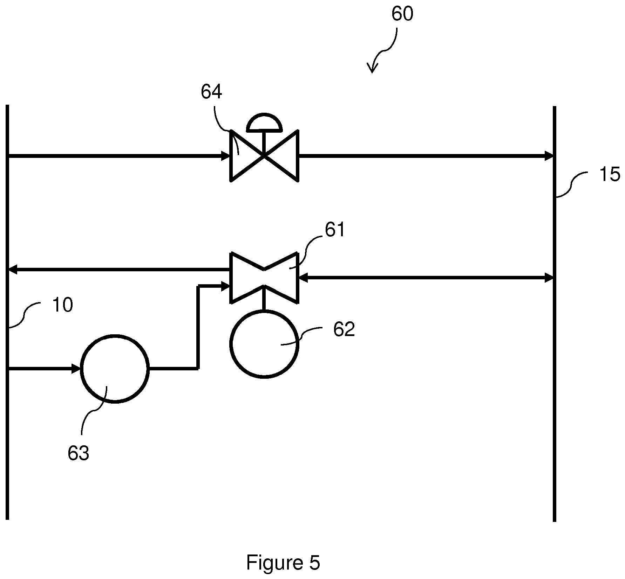

Trois configurations sont envisagées :
- configuration 1, figure 3 : on positionne un détendeur de gaz en parallèle du poste de livraison afin de récupérer l'énergie de détente avec une génératrice qui produit de l'énergie électrique. Cette production d'électricité est séparée de l'installation de rebours et peut en être éloignée,
- configuration 2, figure 4 : on utilise le moteur du compresseur de l'installation de rebours en tant qu'alternateur ou génératrice. De cette manière, l'énergie récupérée au niveau de l'alternateur lors de la détente sert à entraîner le compresseur du rebours, qui produit alors de l'énergie électrique et
- configuration 3, figure 5 : on met en oeuvre un outil réversible pour réaliser la compression nécessaire à l'installation de rebours, dans un sens, et la détente nécessaire au poste de livraison, dans l'autre sens. On dispose ainsi d'un poste de détente et de rebours réversible.

Dans chacune des trois configurations, l'optimisation énergétique utilise pour compresser le gaz lors du fonctionnement du rebours l'énergie de détente récupérée lors de la détente et la livraison du gaz au réseau de distribution.

On observe, en figure 3, une partie d'une installation de rebours 40 objet de l'invention, dans la première configuration mentionnée ci-dessus. Cette installation de rebours 40 comporte :
- un détendeur de gaz 41 provenant du réseau de transport 10 et fournissant du gaz détendu au réseau de distribution 15, entraînant mécaniquement à une génératrice 42,
- un moyen de réchauffage 43 du gaz issu du réseau de transport 10, en amont du détendeur de gaz 41,
- une vanne de détente 44 reliée aux réseaux de transport 10 et de distribution 15 et
- un compresseur 45 pour comprimer du gaz issu du réseau de distribution 15 et l'injecter dans le réseau de transport 10, entraîné par un moteur électrique 46.

Comme on le comprend aisément, lors de la fourniture de gaz par le réseau de transport 10 au réseau de distribution 15, la mise en mouvement du détendeur de gaz 41 provoque la génération d'électricité par la génératrice 42. Au contraire, lors du fonctionnement du compresseur 45 de rebours, de l'électricité est consommée par le moteur 46 qui entraîne le compresseur 45.

On observe, en figure 4, une partie d'une installation de rebours 50 objet de l'invention, dans la deuxième configuration mentionnée ci-dessus. Cette installation de rebours 50 comporte :
- un détendeur de gaz 51 provenant du réseau de transport 10 et fournissant du gaz détendu au réseau de distribution 15, entraînant mécaniquement à une génératrice réversible 52,
- un moyen de réchauffage 53 du gaz issu du réseau de transport 10, en amont du détendeur de gaz 51,
- une vanne de détente 54 reliée aux réseaux de transport 10 et de distribution 15 et
- un compresseur 55 pour comprimer du gaz issu du réseau de distribution 15 et l'injecter dans le réseau de transport 10, entraîné par la génératrice réversible 52.

Comme on le comprend aisément, lors de la fourniture de gaz par le réseau de transport 10 au réseau de distribution 15, la mise en mouvement du détendeur de gaz 51 provoque la génération d'électricité par la génératrice 52. Au contraire, lors du fonctionnement du compresseur 55 de rebours, de l'électricité est consommée par la génératrice 52 agissant alors comme moteur d'entraînement du compresseur 55.

Dans ce deuxième mode de réalisation, la génératrice 52 est constituée du moteur électrique d'au moins un compresseur 55. Le coût de fabrication de l'installation de rebours est ainsi réduit.

Préférentiellement, l'installation de rebours comporte un embrayage (non représenté) entre le détendeur de gaz et la génératrice et/ou un moyen de mise à l'air (non représenté) du détendeur de gaz.

Ainsi, le fonctionnement du compresseur n'entraîne pas le détendeur de gaz.

Préférentiellement, l'installation de rebours comporte un embrayage (non représenté) entre le moteur du compresseur et le compresseur et/ou un moyen de mise à l'air (non représenté) du compresseur.

Ainsi, le fonctionnement du détendeur de gaz est peu perturbé par le fonctionnement du compresseur qui est alors mis à l'air.

On observe, en figure 5, une partie d'une installation de rebours 60 objet de l'invention, dans la troisième configuration mentionnée ci-dessus. Cette installation de rebours 60 comporte :
- un détendeur réversible en compresseur 61 qui détend le gaz provenant du réseau de transport 10 et qui fournit du gaz détendu au réseau de distribution 15. Ce détendeur de gaz est muni d'un entraînement mécanique entraînant une génératrice réversible 62,
- un moyen de réchauffage 63 du gaz issu du réseau de transport 10, en amont du détendeur de gaz 61,
- une vanne de détente 64 reliée aux réseaux de transport 10 et de distribution 15.

Lorsque le détendeur réversible 61 agit en compresseur pour comprimer du gaz issu du réseau de distribution 15 et l'injecter dans le réseau de transport 10, il est entraîné par la génératrice réversible 62.

Comme on le comprend aisément, lors de la fourniture de gaz par le réseau de transport 10 au réseau de distribution 15, la mise en mouvement du détendeur de gaz 61 provoque la génération d'électricité par la génératrice 62. Au contraire, lors du fonctionnement du détendeur de gaz en compresseur de rebours, de l'électricité est consommée par la génératrice 62 agissant alors comme moteur d'entraînement du compresseur.

Dans ce troisième mode de réalisation, le compresseur et le détendeur de gaz sont confondus. Le coût de fabrication de l'installation de rebours est ainsi réduit.

Préférentiellement, dans chacun des modes de réalisation illustrés, le compresseur est un compresseur à piston et clapets, en particulier dans les deuxième et troisième configuration (figures 4 et 5), dans lesquels le compresseur est réversible en détendeur d'entraînement de la génératrice. Cependant, les types de compresseur/détendeur utilisables pour mettre en oeuvre l'invention comportent aussi, par exemple :
- les compresseurs centrifuges,
- les turbines axiales,
- les compresseurs à vis et
- les compresseurs à palette.

Concernant la réversibilité des systèmes de compression à piston pour un usage de production d'énergie par la détente, la circulation du gaz est assurée par des clapets aussi appelés soupapes.

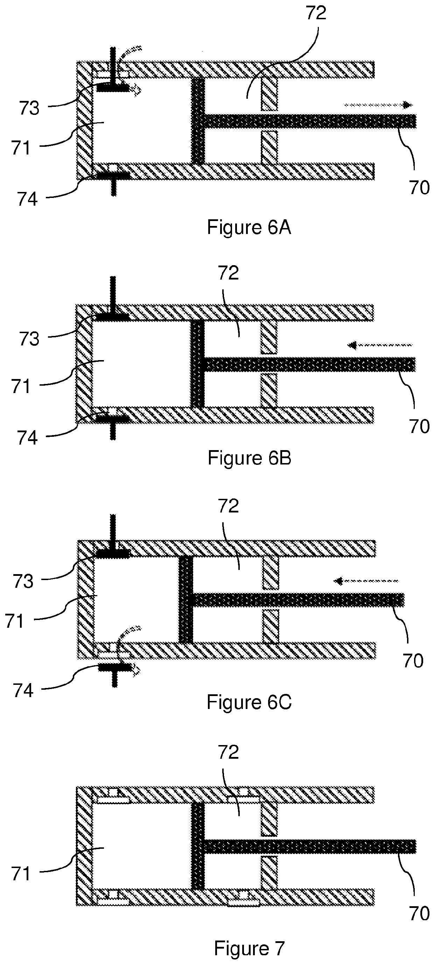

Lors de la compression, les clapets laissent passer librement le gaz pendant les phases d'aspiration et de refoulement suivant leur fonction, et sont étanches pendant la phase de compression. Le mouvement des clapets n'est dû qu'à la différence de pression entre la chambre de compression et le collecteur d'aspiration ou de refoulement. Pour certaines applications, pour ajuster la capacité du compresseur, les clapets d'aspiration peuvent être maintenus ouverts, par un système mécanique, une partie de la phase de compression. Les principales positions clapets et piston sont présentées en figures 6A à 6C. Chaque piston est entraîné par un moteur. Le passage du mouvement rotatif du moteur au mouvement linéaire de chaque piston est effectué par un système vilebrequin puis bielle puis crosse puis tige du piston.

Les technologies de piston sont à simple effet (pression sur une seule face du piston) ou double effet (pression sur les deux faces du piston). En figure 7, un piston double effet est présenté.

Les technologies de clapet actuellement mises en oeuvre pour les techniques actuelles sont appelées dans le cadre de cette invention :
- « clapet autonome » lorsque leur mouvement est piloté naturellement par les pressions et
- « clapet semi-piloté » lorsqu'une position est imposée un partie du cycle de compression par un système mécanique.

Le compresseur est réversible, c'est-à-dire qu'il permet de détendre un gaz et d'entraîner une génératrice. Dans cette configuration de fonctionnement, le compresseur est transformé en moteur, l'énergie provenant alors de la différence de pression entre le gaz en entrée (pression du réseau de transport) et en sortie (pression du réseau de distribution). Préférentiellement, le compresseur réversible est couplé à un moteur électrique réversible, c'est-à-dire pouvant être utilisé en générateur. Ainsi, le système peut être utilisé en générateur électrique ou en compresseur suivant les besoins et les pressions disponibles.

Pour rendre le compresseur à piston réversible, un nouveau mode de pilotage est utilisé. Ce pilotage contrôle la position du clapet en permanence par l'intermédiaire d'un système mécanique. Ce mode de pilotage est appelé un clapet piloté. Dans la présente description, un « clapet piloté » désigne un clapet piloté ou semi-piloté sans distinction.

Dans un but de clarté, le système de transformation de mouvement linéaire en mouvement rotatif et inversement, n'est pas décrit. On décrit un piston double effets, équivalent à deux pistons simple effet en opposition de phase. On note cependant que, dans la présente invention, le nombre de pistons, ainsi que leur phasage n'est aucunement limité à un piston double effets. Suivant les performances attendues, le nombre de pistons, leur positionnement géométrique et leur phasage est adapté.

Dans chacune des figures 6A à 8D, le côté pression basse (réseau de distribution) est en haut de la figure et le côté pression haute (réseau de transport) est en bas de la figure. Dans chacune des figures 6A à 7, on observe un piston 70 se déplaçant entre deux chambres 71 et 72, et des clapets 73 à 78.

On observe, en figure 6A, une phase de remplissage du cylindre (chambre 71), en figure 6B, une phase de compression dans le cylindre (chambre 71) et, en figure 6C, une phase de vidage du cylindre (chambre 71) à la pression haute.

La figure 7 représente l'ensemble cylindres et piston 70 dans le cas d'un piston 70 à double effets. Le cylindre (chambre 71) présentant le plus de volume est appelé « cylindre principal » ou « cylindre arrière ». Le cylindre présentant le plus petit volume (chambre 72) est appelé « cylindre secondaire » ou « cylindre avant ».

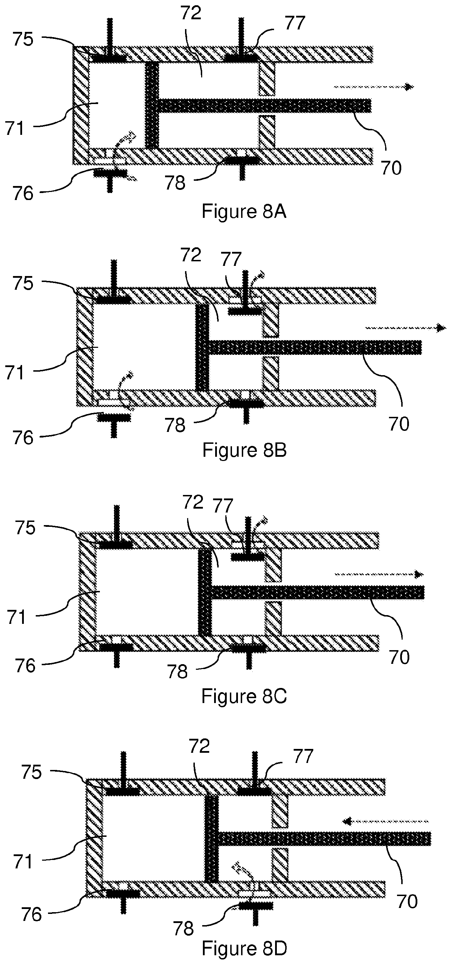

Les figures 8A à 8D représentent le principe de fonctionnement de l'utilisation du compresseur réversible en mode moteur. Dans la figure 8A, le cylindre principal (chambre 71) débute son remplissage, le cylindre secondaire (chambre 72) débute sa montée en pression. Dans la figure 8B, le cylindre principal continue son remplissage, le cylindre secondaire est en phase de détente (vidage côté pression basse). Le choix du maintien du forçage de l'ouverture du clapet 77 côté pression haute est déterminé par le design du clapet 77 et la performance attendue du système (compromis entre détente et puissance). Dans la figure 8C, le débit de détente n'étant pas maximisé, la fin du mouvement linéaire du piston 70 se fait par la détente du gaz dans le cylindre principal. Dans le cadre du compromis entre détente et puissance, le clapet 78 côté pression basse peut être fermé avant la fin de la course du piston 70. Dans la figure 8D, on observe le début du retour du piston 70 via le cylindre secondaire.

Concernant la réversibilité des compresseurs centrifuges pour un usage de production d'énergie par la détente, l'utilisation de cette technologie de centrifugation en production d'énergie lors d'un processus de détente est appelé « turbodétendeur » (usuellement appelé par le terme anglais turbo-expander).

Le turbo-expander est un compresseur centrifuge dans le sens de la compression, chaque système (réversible ou pas, mais avec son pendant) est adapté à un taux de compression ou de détente et une flexibilité de débit. Pour les taux de compression très élevés, c'est le piston, voire la vis qui est utilisé. Le compresseur centrifuge peut aussi être utilisé pour des taux de compression très élevés. Un montage classique à très fort taux de compression pour un gaz à pression initiale très faible est un compresseur à vis suivi d'un compresseur centrifuge.

Sur les plages de pression du rebours, un compresseur à piston est adapté, mais d'autres configurations sont possibles dans la gamme des rebours, par exemple, deux compresseurs centrifuges en série avec refroidissement intermédiaire.

Dans la description qui va suivre, les turbodétendeurs et compresseurs centrifuges sont décomposés en cinq fonctions :
- canal d'entrée,
- diffuseur d'attaque,
- roue centrifuge,
- diffuseur de sortie et
- canal de sortie.

Dans leur mise en oeuvre dans l'installation objet de l'invention, les fonctions des canaux d'entrée et de sortie ainsi que la roue sont dessinées pour être bidirectionnels. La réversibilité des phénomènes de détente ou de compression est réalisée dans le diffuseur de sortie en fonction compression qui devient diffuseur d'attaque en fonction détente. La réversibilité se fait via des aubages 80 variables. Le diffuseur d'attaque en fonction compression peut être à conception à aubage variable suivant les performances attendues par l'un ou l'autre usage (compression ou détente). Les canaux d'entrée et de sortie sont de conception bidirectionnelle.

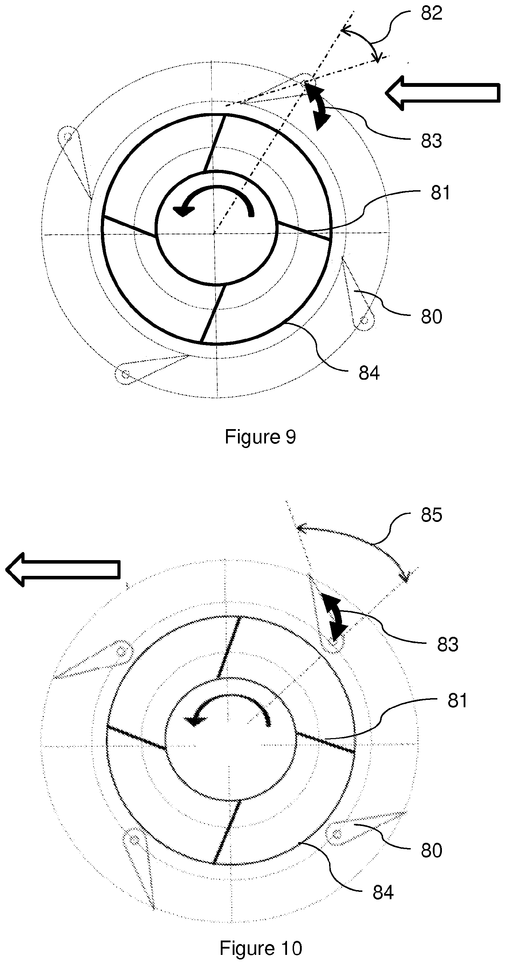

Dans les figures 9 et 10, le nombre de palles 81 de la roue 84 et d'aubages 80 variables des schémas est indicatif. L'angle des aubages 80 représenté est réglable en fonction de performances attendues (rendement, taux, débit). L'angle est donné par la flèche fine 82 représentée en figure 9 et par la flèche fine 85 représentée en figure 10.

La figure 9 représente la position des aubages variables 80 dans la fonction turbodétendeur. La double flèche en trait fort 83 représente la modification de l'axe de rotation des aubages 80. Si seul l'angle des aubage 80 était modifié, le système serait moins performant dans sa fonction compression en raison de l'espace plus important entre les aubages 80 et la roue 84. La figure 10 représente la position des aubages variables 80 dans la fonction compression.

Concernant la réversibilité des compresseurs à vis ou à palette pour un usage de production d'énergie par la détente, ceux-ci peuvent être dessinés de façon réversible ou garder un dessin privilégiant un rendement optimum dans un sens privilégié.

On note que, dans chacun des modes de réalisation représentés dans les figures, l'installation de rebours comporte, de plus, un détendeur de gaz sans récupération énergétique en parallèle du détendeur de gaz entraînant la génératrice. Cependant, ce détendeur sans récupération énergétique, par exemple constitué d'une vanne de détente, est optionnel.

On donne, ci-dessous, d'autres précisions pour la mise en oeuvre de l'invention.

L'électricité générée peut servir à faire de l'hydrogène (par électrolyse), peut injectée dans le réseau électrique, ou revendue pour des consommateurs d'électricité à proximité de l'installation de rebours.

Les principaux types de rebours réversibles envisagés sont :
- la turbine radiale avec compression centrifuge,
- les compresseurs orbitaux et
- les compresseur à vis

Le froid généré par la détente de gaz peut provoquer la génération d'hydrate qui peut endommager la turbine. On réchauffe donc le gaz en amont de la détente et on choisit préférentiellement une détente à plusieurs étages avec réchauffage à chaque étape.

De manière similaire, en compression, on refroidit préférentiellement le gaz comprimé par étage.

Préférentiellement, on met en oeuvre un échangeur de chaleur réversible commun pour le chauffage et le refroidissement.

Les postes rebours nécessitent une motorisation, électrique ou autre.

L'introduction d'une génératrice permet d'introduire des optimisations énergétiques associées au poste rebours, notamment par :
- la mise en commun de la ligne électrique (l'arrivée du rebours permet d'électrifier le poste de détente si celui-ci en est dépourvu et permet de d'économiser l'arrivée d'une ligne si le poste de détente en est équipé),
- le regroupement des infrastructures sur un même site (route d'accès, clôture, etc...),
- l'optimisation des équipements,
- l'optimisation énergétique en étant producteur d'électricité lors des fortes consommations de gaz, ce qui correspond généralement à une forte consommation électrique et donc un coût de l'électricité élevé. En plus, ou en remplacement de la ligne d'alimentation électrique, un système d'accumulation d'énergie, de type batterie ou autre, peut être ajouté au système en dernier ajustement de l'optimisation énergétique du système.

On montre, ci-dessous, des solutions permettant de valoriser l'énergie de la détente pour les appliquer sur les installations de rebours. Pour l'heure, les rebours ne sont destinés à fonctionner que quelques heures d'été par an. Il s'agit donc d'une solution qui permet de dégager un revenu le reste de l'année en valorisant certains éléments du poste de détente.

Trois solutions sont envisagées ci-dessous :
- Réaliser la détente au-travers d'une turbine raccordée à un alternateur pour produire de l'électricité en hiver (solution de référence)
- Mutualiser l'alternateur via une boite de vitesse commune entre le détendeur et le compresseur
- Concevoir une machine réversible qui sera utilisée comme compresseur l'été et comme détendeur l'hiver.

Le coût de l'alternateur/génératrice est faible rapporté à l'ensemble de la ligne comprenant le compresseur et/ou le détendeur, et donc le gain de la deuxième option paraît limité. De plus, le coût d'une boite de vitesse commune débrayable augmenterait de plus de moitié les CAPEX et les OPEX. Cela restreint les choix sur l'architecture du détendeur, obligeant le concepteur à installer une garniture d'étanchéité qui va polluer le gaz ou générer un débit de fuite à l'atmosphère.

Le rendement d'une telle boîte de vitesse serait inférieur à 90%, réduisant la performance énergétique et rendant obligatoire l'ajout d'une centrale de lubrification de forte capacité, de coût élevé.

En revanche, une machine réversible compacte et hermétique permet une réduction des coûts et de la complexité de l'installation, tout en permettant de dégager un revenu le reste de l'année.

Il existe d'autres débouchés, en particulier la compression de gaz naturel ou de gaz industriel.

La chauffe du gaz en amont de la détente ou pendant celle-ci est indispensable. Pour cela, deux solutions existent.
- L'installation d'une cogénération appelée CHP (pour *Cogeneration Heat and Power*) consiste à utiliser la chaleur issue de la combustion d'un moteur au gaz pour la chauffe du gaz de la ligne de détente. Le moteur est accouplé à une génératrice ce qui multiplie par deux la production d'électricité.
- L'installation d'une pompe à chaleur, qui permet de transférer de la chaleur depuis une source à une certaine température vers un puits à une température supérieure.

La consommation de la pompe à chaleur est directement proportionnelle à la différence de température entre cette source de chaleur et le palier de chauffe, permettant de se placer hors des conditions de formation des gaz hydrate. Elle est intéressante si les conditions environnantes le permettent (température ambiante élevée en hiver ou source géothermale).

Les spécifications fonctionnelles de postes de rebours réversibles comportent :
- F1 : Permettre la transmission d'un débit volumique fini de gaz depuis le réseau de distribution moyenne pression (GRDF) vers le réseau de transport à haute pression (GRTgaz) en période creuse.
- F2 : Valoriser énergétiquement la détente d'un débit volumique fini hors période creuse pour compenser la consommation du poste rebours en période creuse.
- F3 : Garantir une absence de variation en pression du réseau de distribution
- F4 : Respecter les spécifications de conformité du réseau GRTgaz et GRDF
- F5 : Respecter les spécifications de qualité du réseau GRTgaz et GRDF
Les opérations de compression (F1) et de détente (F2) ne sont pas réalisées simultanément.

La température de sortie du poste ne doit pas être inférieure aux préconisations applicables au réseau de transport.

Trois solutions, permettant de réduire les coûts en mutualisant certains éléments entre le poste de détente équipé d'une turbine et le poste rebours, sont comparées ci-dessous.

Pour réduire les coûts, on peut équiper le système d'un moteur/alternateur réversible. La turbine et le compresseur sont alors montés sur une boîte de vitesse commune.

En hiver, l'alternateur est un générateur synchrone 4 pôle qui tourne à la vitesse du réseau (50 Hz soit 1500 tr.min⁻¹). La turbine est axiale ou radiale et tourne à une vitesse de 3000 tr.min⁻¹. Le compresseur est désaccouplé ou mis à l'atmosphère. En été, le moteur est piloté par un variateur de fréquence jusqu'à une vitesse prédéterminée, par exemple de 1000 tr.min⁻¹. Dans cette configuration, aucun rapport de réduction n'est nécessaire.

Une première solution consiste à équiper la boite de vitesse d'un pignon baladeur unique, placé sur une ligne bridée à l'alternateur. Cette ligne vient engrener en coulissant tantôt la ligne à 3000 tr.min⁻¹équipée d'une plus petite roue (augmentation de vitesse), tantôt la ligne à 1000 tr.min⁻¹ équipée d'une roue de taille équivalente (rapport de réduction presque égal à 1). Le changement de ligne se fera manuellement par un levier, à vitesse nulle.

Une deuxième solution consiste à avoir un arbre en entrée, traversant avec une sortie directe sur la ligne du compresseur (1000 tr.min⁻¹) ainsi qu'une sortie sur la ligne de la turbine (3000 tr.min⁻¹) toutes deux équipées en bout d'arbre d'un accouplement débrayable.

Pour réduire encore les coûts, on mutualise la fonction compression et détente par le même organe. Parmi les technologies existantes, les compresseurs volumétriques orbitaux et les compresseurs centrifuges sont potentiellement réversibles.

Par exemple, on met en oeuvre une turbine radiale réversible en compresseur centrifuge, bi-étagée, avec deux rotors montés de part et d'autre d'un alternateur à haute vitesse 60,000 tr.min⁻¹, réversible et équipé d'un variateur de fréquence. L'échangeur intermédiaire peut être utilisé indépendamment pour réchauffer le gaz avant le deuxième étage de détente ou bien le refroidir avant sa recompression. La très haute vitesse de rotation permet d'atteindre de très forts taux de détente ou de compression avec un faible diamètre de rotor.

Avec un compresseur centrifuge, on a une plage de fonctionnement limitée entre la courbe de pompage et le débit d'étouffement. Aussi, on préfère une régulation en pression par recyclage afin de faire fonctionner le compresseur sur un point en particulier.

### Régulation du poste de détente

Dans un premier cas, le débit total est décomposé en un débit fixe qui traverse la turbine et un débit variable qui suit les consommations aval et qui passe par un régulateur de pression. La pression d'admission turbine est régulée par une vanne d'admission. La turbine n'est préférentiellement alimentée que lorsque le débit volumique est suffisant, et à régime constant. Alternativement, on accepte une plage de variation de pression sur le réseau de distribution. En considérant que la pression du réseau de transport est constante, la turbine s'adapte aux conditions génératrices. Une vanne d'admission tout ou rien (« ON/OFF ») permet de s'assurer que la turbine n'est pas utilisée en dehors de sa plage de fonctionnement. Pour une meilleure adaptation, il est recommandé d'utiliser un alternateur à vitesse variable et un stator variable dans cette configuration.

Une machine centrifuge est composée d'une volute, d'un diffuseur (ou redresseur) et d'une roue mobile. Les compresseurs centrifuges transforment l'énergie mécanique de rotation en augmentation de pression du gaz. L'aspiration, la compression et le refoulement sont des processus de flux continu

Le fluide gazeux est admis à l'axe de rotation, accéléré par centrifugation puis « piégé » au sein de volutes permettant de transformer l'énergie cinétique du gaz en pression. Les compresseurs centrifuges se distinguent des compresseurs à piston, notamment, par leur taux de compression plus faible et une plage de fonctionnement plus restrictive.

Les turbines radiales fonctionnent de manière strictement opposée. Le gaz est admis à haute pression en périphérie et il est détendu en allant vers le centre de la rotation (arbre). Par rapport à une turbine axiale, le fait que le gaz s'écoule de l'extérieur vers l'arbre réduit le niveau de stress et de vibration des éléments. La machine absorbe mieux également les contraintes thermiques.

Préférentiellement, la détente ou la compression peuvent cependant être étagée en montant deux rotors sur un arbre unique.

Une turbine radiale, du fait de sa compacité, peut être montée sur la boîte de vitesse avec une mutualisation pour la lubrification des roulements et de la boîte de vitesse. Dans ce cas-là, une garniture d'étanchéité (à l'huile ou au gaz) isole le gaz de réseau de l'environnement.

Dans des modes de réalisation, deux garnitures mécaniques sont montées en tandem. Une chambre intermédiaire à faible pression permet de réduire de près de 90% la fuite de gaz à l'atmosphère.

Dans des modes de réalisation, à garniture double avec fluide de barrage, l'étanchéité dynamique est assurée par une garniture double en tandem avec labyrinthe intermédiaire. Un gaz neutre (azote) de barrage est injecté en surpression dans une chambre intermédiaire à une pression supérieure à la pression de travail.

La fuite de ce gaz de barrage dans l'atmosphère ne pose pas de problème car il est déjà présent en grande quantité dans l'atmosphère. En revanche, le gaz compressé ou détendu est pollué par le gaz de barrage qui est en surpression.
Cette architecture est rencontrée sur les garnitures à huile également.

L'autre grande famille d'architecture est la machine hermétique. Dans une ce type de machine, l'alternateur (à haute vitesse généralement) est monté directement sur l'arbre et noyé dans le gaz. Il est refroidi par un circuit extérieur qui n'est pas en contact avec le gaz.

L'absence de boite de vitesse permet un meilleur rendement mécanique en réduisant les pertes par friction. Dans cette configuration, les paliers ou roulements ne sont pas lubrifiés :
- Les paliers magnétiques encaissent très bien les efforts axiaux et n'imposent pas de contrainte sur le degré de réaction de la turbine. Ils sont en général utilisés pour des applications entre 300 kW et 1 MW.
- En-deçà de 300 kW, des roulements graissés ou secs peuvent être envisagés.

Cette configuration n'entraine aucune pollution du gaz naturel, aucun frottement ni aucune émission vers l'extérieur. Elle permet de plus d'accoupler deux étages de détente / compression sur un même arbre avec au centre un alternateur haute vitesse à vitesse variable ce qui permet un gain de compacité important et des pertes mécaniques par frottement presque nulles.

Enfin, avec une détente / compression étagée sur la même machine, on peut intégrer un échangeur externe entre les deux étages pour réchauffer le gaz lors de la détente ou le refroidir lors de la compression, de la même manière que pour un compresseur alternatif à piston.

Un stator variable permet de modifier la condition génératrice en entrée turbine et donc :
- D'augmenter la plage de débit pour laquelle la machine est utilisable
- De lisser le rendement isentropique sur la plage de débit

Contrairement à un compresseur à pistons, la plage de fonctionnement d'un compresseur centrifuge est contrainte par sa ligne de pompage et son débit d'étouffement. On va donc privilégier une solution à débit fixe comme le recyclage.

Certains compresseurs volumétriques rotatifs peuvent être utilisés comme détendeur. C'est le cas des compresseurs à vis et des compresseurs orbitaux.

Les irréversibilités sont très importantes dans ce type de machine, ce qui réduit leur performance. La plupart d'entre elles sont induites à l'aspiration et au refoulement, durant les phases d'expansions par frottement pariétal et recirculation et par des fuites internes.

Le profil du rotor joue un rôle important dans la réduction des fuites et des pertes par frottement. Les premiers compresseurs à vis avaient un profil symétrique qui créer des jeux importants lorsqu'ils étaient utilisés comme détendeurs. Le développement de nouveaux types de profils à aboutit au profil « N » qui a de faibles jeux et des frottements réduits.

Les compresseurs orbitaux sont des machines à déplacement positif qui ont un ratio volumétrique fixé par construction. Il est composé d'une spirale fixe et d'une spirale mobile. La pression augmente lorsque l'on s'approche du centre de la spirale.

On peut classer ces détendeurs en deux catégories selon la façon dont sont gérés les frottements :
- *Compresseur lubrifié* : compresseur lubrifié à l'huile, réduit les jeux et les pertes mais nécessite une unité de lubrification complexe
- *Compresseur contraint* : les parties tournantes sont contraintes sur les parties fixes via un matériau ayant un très faible coefficient de frottement (Teflon^{®})

Le taux de détente (ou de compression) de ce type de machine est généralement inférieur à 10. Pour des rapports plus élevés, il est nécessaire de les monter en série. Les détendeurs volumétriques sont extrêmement performants à leur point de design, car ils sont fortement dépendants du rapport volumétrique obtenu par construction.

On observe parfois le givrage des organes de régulation du poste de détente en hiver. Sans apport de chaleur au cours de la détente avec récupération d'énergie, ce phénomène sera grandement accentué. En effet, depuis longtemps, on observe que le passage du gaz à travers le régulateur de pression fait chuter sa température. Du point de vue de l'écoulement, une vanne de régulation est un obstacle statique qui engendre un différentiel de pression. Ce type de transformation est appelée détente isenthalpique. La grandeur thermodynamique conservée est l'enthalpie massique qui exprime la quantité d'énergie contenue dans un kilogramme de matière (en ***kJ.kg*⁻¹**)*.*

Connaissant l'état en entrée et la pression en sortie, on en déduit la température en sortie. Dans le cas où l'énergie cinétique du gaz est valorisée à travers une turbine, on parle de détente isentropique. La grandeur thermodynamique conservée (au rendement ***ηᵢₛ*** près) est alors l'entropie massique (exprimée en ***kJ.kg*⁻¹*.K*⁻¹**)*.*

Le rendement isentropique ***ηᵢₛ*** quantifie les irréversibilités liées à la transformation (pertes par frottement visqueux, fuites internes, frottements pariétaux). Il caractérise l'efficacité de la machine concernée. En effet, l'énergie extraite du fluide sous forme de travail est directement proportionnelle à la chute enthalpique (**Δ*h*₁₂**) et au débit massique (***ṁ***). Plus le rendement est grand, plus la quantité de travail fournie à l'arbre sera importante.

Les hydrates sont une classe non-stoechiométrique de composés appelée clathrates. Ils se forment lorsqu'un composé hôte, l'eau via ses liaisons hydrogènes, forme une structure enfermant un autre composé, une molécule de méthane.

### Gaz Naturel + Eau (liquide) <> Hydrates (solide)

En raison des conditions de pression et de la chute de température lors de la détente isentropique, le risque de formation d'hydrate est accru. Or, la formation de composés solides dans les parties internes un turbodétendeur peut entraîner le blocage de l'écoulement ou une dégradation matérielle. Il est donc impératif de maîtriser le risque de formation de ces hydrates lors de la détente.

La cogénération consiste à coupler l'utilisation d'un moteur thermique et d'une turbine d'expansion.
- Une génératrice accouplée au moteur augmente la production d'électricité,
- L'énergie thermique libérée par la combustion du moteur est utilisée afin de préchauffer le gaz.

Cette énergie thermique est contenue dans les eaux de refroidissement du moteur (huile de lubrification, chemise des pistons, refroidissement du gaz) et dans les fumées libérées par la combustion.

Un circuit caloporteur collecte cette chaleur (des eaux de refroidissement du moteur et des fumées d'échappement) pour préchauffer le gaz avant la détente et éventuellement le réchauffer dans le cas d'une détente étagée.

Pour modéliser la performance de la cogénération, on part des conditions du site (température, pression amont et aval) et de la puissance thermique à fournir pour se placer hors des conditions de formation de méthane hydrate.

La performance globale de la cogénération dépend :
- De la charge partielle du moteur
- De la température de sortie des fumées après l'échangeur

Les fumées sortent du moteur à une température proche des 430°C et à pression atmosphérique. Une partie importante de l'énergie thermique du moteur s'y trouve.

Pour estimer la composition de ces fumées, on peut considérer que la réaction de combustion du méthane avec l'oxygène de l'air forme de l'eau et du dioxyde de carbone. L'azote présent dans l'air ambiant n'est normalement pas oxydé (en réalité une infime portion réagit avec le carbone pour former des NOx). Ces fumées contiennent pour une bonne partie de la vapeur d'eau qu'il convient de condenser afin de valoriser la chaleur latente disponible.

Des filtres placés à l'aval réduisent la quantité de CO₂ rejeté en deçà des seuils normatifs. Si une serre est à proximité, il est possible de régler le moteur pour augmenter le taux de CO₂ à valoriser. Cela se fait cependant au détriment des performances du moteur. Plus la température de sortie des fumées est basse, meilleur sera le rendement global de la cogénération. Il est donc intéressant d'étager la détente

La pompe à chaleur (PAC) permet d'extraire les calories d'un milieu pour les transférer à plus haute température à un second milieu. La pompe à chaleur est basée sur le cycle de Rankine-Hirn :
- 1 - 2 : Compression isentropique
- 2 - 4 : Condensation isobare
- 4 - 5 : Détente isenthalpique
- 5 - 1 : Évaporation isobare

Les niveaux de pression sont fixés par les températures d'évaporation et de condensation. À l'était de mixture (sous la cloche) c'est la qualité de vapeur et non plus la température qui varie lorsque le système échange de la chaleur : on parle de palier de vaporisation (5 - 1) et de palier de condensation (3 - 4). La transformation 1 - 2 (compression isentropique) permet d'élever la température du gaz. Les grandeurs évoluent de la même manière que pour la détente isentropique à la différence que le rendement est au dénominateur. L'enthalpie en sortie du condenseur est déjà connue, car il s'agit du point d'ébullition à la température de condensation. La transformation 4 - 5 (détente isenthalpique) permet de l'abaisser au-dessous de la température du milieu ambiant. On rappelle que dans ce cas c'est l'enthalpie qui est conservée. La température du palier de vaporisation 5 - 1 dépend essentiellement du milieu ambiant considéré.

Si les calories sont extraites d'une source géothermale, alors la consommation est celle d'une pompe d'extraction.

Si l'on souhaite que la température du gaz à un point ne descende pas en-deçà du seuil d'apparition de méthane-hydrate, il faut nécessairement étager la détente. Pour cela le gaz est préchauffé à l'entrée de chaque étage de détente.

Quel que soit le milieu considéré, l'utilisation d'une pompe à chaleur est indispensable pour élever la température du gaz au-dessus des conditions de formation de méthane - hydrate. La performance de cette solution dépend essentiellement de la source de chaleur disponible aux alentours (air ambiant, échangeur enterré, géothermie).

Dans les stations d'interconnexion qui nous intéressent, le gaz doit être détendu, c'est-à-dire que sa pression est abaissée pour passer du réseau de transport (haute pression) au réseau de distribution (basse pression). Cette détente génère de l'énergie dite fatale. Cette énergie fatale, perdue, peut être valorisée notamment pour produire de l'électricité à l'aide d'une turbine.

La détente du gaz a aussi pour conséquence de générer du froid. Par conséquent, il faut réchauffer le gaz en amont pour pouvoir récupérer l'énergie fatale sans que les conduites de gaz gèlent. Dans des modes de réalisation du poste de rebours, le chauffage est assuré avec la géothermie. Plus précisément : l'eau du circuit de géothermie est captée après avoir été envoyée au réseau de chauffage urbain local, à environ 30°C, température suffisante pour le réchauffement. Ceci a pour bénéfice de renvoyer une eau plus froide vers les puits de géothermie, avec pour conséquence la diminution de l'utilisation de la pompe en favorisant la circulation naturelle.

Le réchauffage du gaz peut aussi être assuré par une centrale locale de cogénération, notamment en hiver. Cette cogénération est une installation à haute efficacité énergétique qui, associée à la turbine de détente, double la production électrique. L'ensemble atteint alors des rendements de l'ordre de 80% : Pour 100 unités de gaz, le système permet de produire 40 unités d'électricité via la turbine et 40 unités d'électricité avec la cogénération. Le poste de rebours permet donc de produire de l'électricité principalement décarbonée avec un rendement de 80%. Ce système devient une centrale de pointe du réseau en substitution à une centrale à énergie fossile beaucoup plus émettrice de CO₂.

La forte baisse de la température du flux gazeux aval à la détente, dommageable à l'intégrité du réseau, nécessite de réchauffer le flux gazeux par un apport extérieur de calories. La source la plus communément utilisée est celle d'une chaudière en amont de la vanne de détente : double perte, puisque l'énergie de détente n'est pas récupérée et du gaz est consommé. Aussi, préférentiellement, on fait appel à une source locale de chaleur naturelle, qui autrement resterait inutilisée, et on y associe une installation de cogénération. Ainsi sont valorisées les synergies entre les trois réseaux de chaleur, de gaz et d'électricité.

La baisse de pression engendre un fort refroidissement du gaz, deux fois plus marqué avec la turbine qu'elle ne l'est avec les vannes. Ce qui pourrait faire chuter sa température à -30°C.

Pour réchauffer le gaz en amont de la détente, on a recours à un cogénérateur. Issue de la combustion de gaz, l'électricité est injectée dans le réseau électrique, tandis que la chaleur est utilisée pour réchauffer le gaz en amont de la turbine.

En été, on recourir à un réseau de chaleur, par exemple géothermique, passant ainsi à une énergie 100% renouvelable. Dans des modes de réalisation, l'eau sort des puits à 70°C, puis elle passe dans les immeubles, avant de revenir aux puits à la température de 35°C : c'est cette chaleur résiduelle que l'on utilise, ce qui va encore accroître l'efficacité du réseau de chaleur.

On note que l'on peut utiliser le froid généré par la décompression du gaz, que ce soit pour le refroidissement des centre de données (« data centers ») ou pour la climatisation.

## Revendications

1. Système de rebours, comportant:
- une installation de rebours (30, 40, 50, 60) à optimisation énergétique comportant :
- au moins un compresseur (21, 45, 55, 61) entre un réseau de gaz (15) à une première pression et un réseau de gaz (10) à une deuxième pression supérieure à la première pression, le compresseur étant entraîné par un moteur électrique (46, 52, 62),
- un automate (25) de commande du fonctionnement de chaque compresseur,
- au moins un capteur (19) de conformité de qualité du gaz circulant dans le compresseur,
- au moins un compteur (20) pour compter un débit de gaz circulant dans le compresseur,
- au moins un filtre (22) pour filtrer le gaz circulant dans le compresseur,
- un détendeur de gaz (41, 51, 61) pour détendre du gaz initialement à la deuxième pression pour alimenter le réseau de gaz à la première pression,
- une génératrice (42, 52, 62) entraînée par le détendeur de gaz ; et
- une unité de cogénération de chaleur et d'énergie électrique, la chaleur étant utilisée pour réchauffer le gaz en cours de détente, la sortie d'électricité de la génératrice étant reliée à la sortie d'électricité de l'unité de cogénération.

2. Système de rebours (30, 60) selon la revendication 1, dans lequel le compresseur (61) et le détendeur de gaz (61) sont confondus.

3. Système de rebours (30, 50, 60) selon l'une des revendications 1 ou 2, dans lequel la génératrice (52, 62) est constituée du moteur électrique d'au moins un compresseur (55, 61).

4. Système de rebours (30, 40, 50, 60) selon l'une des revendications 1 à 3, qui comporte un embrayage entre le détendeur de gaz (41, 51, 61) et la génératrice (42, 52, 62).

5. Système de rebours (30, 40, 50, 60) selon l'une des revendications 1 à 4, qui comporte un embrayage entre le moteur (46, 52, 62) du compresseur et le compresseur (21, 45, 55, 61).

6. Système de rebours (30, 40, 50, 60) selon l'une des revendications 1 à 5, qui comporte un moyen de mise à l'air du détendeur de gaz (41, 51, 61).

7. Système de rebours (30, 40, 50, 60) selon l'une des revendications 1 à 6, qui comporte un moyen de mise à l'air du compresseur (21, 45, 55, 61).

8. Système de rebours (30, 40, 50, 60) selon l'une des revendications 1 à 7, qui comporte, de plus, un détendeur de gaz (12) sans récupération énergétique en parallèle du détendeur de gaz (41, 51, 61) entraînant la génératrice.

9. Système de rebours (30, 40, 50, 60) selon l'une des revendications 1 à 8, dans lequel le compresseur (21, 45, 55, 61) est un compresseur centrifuge à aubages variables.

10. Système de rebours (30, 40, 50, 60) selon l'une des revendications 1 à 9, qui comporte un échangeur de chaleur réversible commun pour le chauffage du gaz à détendre et le refroidissement du gaz à comprimer.

11. Système de rebours (30, 40, 50, 60) selon la revendication 10, dans lequel l'unité de cogénération comporte un moteur accouplé à une génératrice, la chaleur dégagée par le moteur réchauffant le gaz en cours de détente.

12. Système de rebours (30, 40, 50, 60) selon l'une des revendications 1 à 11, dans lequel la génératrice est une turbine radiale réversible en compresseur centrifuge, bi-étagée, avec deux rotors montés de part et d'autre d'un alternateur.

13. Système de rebours (30, 40, 50, 60) selon la revendication 12, dans lequel l'alternateur est à vitesse variable et comporte un stator variable.

14. Système de rebours (30, 40, 50, 60) selon l'une des revendications 12 ou 13, dans lequel la détente ou la compression sont étagée en montant deux rotors sur un arbre unique.

## Patentansprüche

1. Nachspeisesystem, umfassend:
- eine energieoptimierte Nachspeiseanlage (30, 40, 50, 60), die aufweist:
- mindestens einen Verdichter (21, 45, 55, 61) zwischen einem Gasnetz (15) mit einem ersten Druck und einem Gasnetz (10) mit einem zweiten Druck über dem ersten Druck, wobei der Verdichter von einem Elektromotor (46, 52, 62) angetrieben wird,
- eine Automatik (25) zur Steuerung des Betriebs jedes Verdichters,
- mindestens einen Qualitätskonformitätssensor (19) für das im Verdichter zirkulierende Gas,
- mindestens einen Zähler (20) zum Zählen eines im Verdichter zirkulierenden Gasdurchsatzes,
- mindestens einen Filter (22) zum Filtern des im Verdichter zirkulierenden Gases,
- einen Gasdruckregler (41, 51, 61), um Gas mit zunächst dem zweiten Druck zu entspannen, um das Gasnetz mit dem ersten Druck zu versorgen,
- einen von dem Gasdruckregler angetriebenen Generator (42, 52, 62); und
- eine KWK-Einheit für Wärme und elektrische Energie, wobei die Wärme zur Erwärmung des sich in Entspannung befindlichen Gases genutzt wird, wobei der Stromausgang des Generators mit dem Stromausgang der KWK-Einheit verbunden ist.

2. Nachspeisesystem (30, 60) nach Anspruch 1, wobei der Verdichter (61) und der Gasdruckregler (61) ineinander übergehen.

3. Nachspeisesystem (30, 50, 60) nach einem der Ansprüche 1 oder 2, wobei der Generator (52, 62) aus dem Elektromotor mindestens eines Verdichters (55, 61) besteht.

4. Nachspeisesystem (30, 40, 50, 60) nach einem der Ansprüche 1 bis 3, das eine Kupplung zwischen dem Gasdruckregler (41, 51, 61) und dem Generator (42, 52, 62) umfasst.

5. Nachspeisesystem (30, 40, 50, 60) nach einem der Ansprüche 1 bis 4, das eine Kupplung zwischen dem Motor (46, 52, 62) des Verdichters und dem Verdichter (21, 45, 55, 61) umfasst.

6. Nachspeisesystem (30, 40, 50, 60) nach einem der Ansprüche 1 bis 5, das ein Entlüftungsmittel des Gasdruckreglers (41, 51, 61) umfasst.

7. Nachspeisesystem (30, 40, 50, 60) nach einem der Ansprüche 1 bis 6, das ein Entlüftungsmittel des Verdichters (21, 45, 55, 61) umfasst.

8. Nachspeisesystem (30, 40, 50, 60) nach einem der Ansprüche 1 bis 7, das außerdem einen Gasdruckregler (12) ohne Energierückgewinnung parallel zum Gasdruckregler (41, 51, 61) umfasst, der den Generator antreibt.

9. Nachspeisesystem (30, 40, 50, 60) nach einem der Ansprüche 1 bis 8, wobei der Verdichter (21, 45, 55, 61) ein Zentrifugalverdichter mit variablen Schaufeln ist.

10. Nachspeisesystem (30, 40, 50, 60) nach einem der Ansprüche 1 bis 9, das einen gemeinsamen reversiblen Wärmetauscher zur Erwärmung des zu entspannenden Gases und zur Kühlung des zu verdichtenden Gases umfasst.

11. Nachspeisesystem (30, 40, 50, 60) nach Anspruch 10, wobei die KWK-Einheit einen an einen Generator gekoppelten Motor aufweist, wobei die vom Motor abgegebene Wärme das in Entspannung befindliche Gas erwärmt.

12. Nachspeisesystem (30, 40, 50, 60) nach einem der Ansprüche 1 bis 11, wobei der Generator eine zweistufige reversible Zentrifugalverdichter-Radialturbine mit zwei Rotoren beiderseits eines Wechselstromgenerators ist.

13. Nachspeisesystem (30, 40, 50, 60) nach Anspruch 12, wobei der Wechselstromgenerator eine variable Drehzahl hat und einen variablen Stator aufweist.

14. Nachspeisesystem (30, 40, 50, 60) nach einem der Ansprüche 12 oder 13, wobei die Entspannung oder die Verdichtung durch Anbringung von zwei Rotoren auf einer einzigen Welle gestuft sind.

## Claims

1. Backfeeding system, comprising:
- an energy-optimised backfeeding installation (30, 40, 50, 60) comprising:
- at least one compressor (21, 45, 55, 61) between a gas network (15) at a first pressure and a gas network (10) at a second pressure higher than the first pressure, the compressor being driven by an electric motor (46, 52, 62);
- a programmable logic controller (25) for controlling the operation of each compressor;
- at least one sensor (19) for checking the quality compliance of the gas circulating in the compressor;
- at least one meter (20) for metering a flow rate of gas circulating in the compressor;
- at least one filter (22) for filtering the gas circulating in the compressor;
- a gas expander (41, 51, 61) for expanding gas initially at the second pressure in order to supply the gas network at the first pressure;
- a generator (42, 52, 62) driven by the gas expander; and
- a heat and electrical power cogeneration unit, the heat being used to heat the gas during expansion, the electricity outlet of the generator being connected to the electricity outlet of the cogeneration unit.

2. Backfeeding system (30, 60) according to claim 1, wherein the compressor (61) and the gas expander (61) are one and the same.

3. Backfeeding system (30, 50, 60) according to one of claims 1 or 2, wherein the generator (52, 62) is formed by the electric motor of at least one compressor (55, 61).

4. Backfeeding system (30, 40, 50, 60) according to one of claims 1 to 3, which comprises a clutch between the gas expander (41, 51, 61) and the generator (42, 52, 62).

5. Backfeeding system (30, 40, 50, 60) according to one of claims 1 to 4, which comprises a clutch between the between the compressor motor (46, 52, 62) and the compressor (21, 45, 55, 61).

6. Backfeeding system (30, 40, 50, 60) according to one of claims 1 to 5, which comprises a means for venting the gas expander (41, 51, 61).

7. Backfeeding system (30, 40, 50, 60) according to one of claims 1 to 6, which comprises a means for venting the compressor (21, 45, 55, 61).

8. Backfeeding system (30, 40, 50, 60) according to one of claims 1 to 7, which also comprises a gas expander (12) with no energy recovery in parallel with the gas expander (41, 51, 61) driving the generator.

9. Backfeeding system (30, 40, 50, 60) according to one of claims 1 to 8, wherein the compressor (21, 45, 55, 61) is a centrifugal compressor with variable blades.

10. Backfeeding system (30, 40, 50, 60) according to one of claims 1 to 9, which comprises a shared reversible heat exchanger for heating the gas to be expanded and cooling the gas to be compressed.

11. Backfeeding system (30, 40, 50, 60) according to claim 10, wherein the cogeneration unit comprises a motor coupled to a generator, the heat generated by the motor heating the gas during expansion.

12. Backfeeding system (30, 40, 50, 60) according to one of claims 1 to 11, wherein the generator is a reversible radial turbine as a two-stage centrifugal compressor with two rotors mounted either side of an alternator.

13. Backfeeding system (30, 40, 50, 60) according to claim 12, wherein the alternator is variable-speed and comprises a variable stator.

14. Backfeeding system (30, 40, 50, 60) according to one of claims 12 or 13, wherein the expansion or compression are stepped by mounting two rotors on a single shaft.
